# EUROPÄISCHE PATENTANMELDUNG

(11) **EP 3 051 502 A1**
(43) Veröffentlichungstag der Anmeldung: **03.08.2016**
(21) Anmeldenummer: 16151644.8
(22) Anmeldetag: 18.01.2016
(51) Int. Cl.: G07B 15/04

(54) **PARKRAUM-ZUFAHRTSKONTROLLSYSTEM SOWIE VERFAHREN ZUR KONTROLLE DER ZUFAHRT IN EINEN PARKRAUM**

(30) Priorität: 28.01.2015 DE 102015201420
(71) Anmelder: DESIGNA Verkehrsleittechnik GmbH, 24109 Kiel (DE)
(72) Erfinder: Ille, Stefan, 24251 Osdorf (DE)
(74) Vertreter: Patentanwälte Vollmann & Hemmer

(57) **Zusammenfassung**

Die Erfindung betrifft ein Parkraum-Zufahrtskontrollsystem mit zumindest einer ersten Sperreinrichtung (6), welche mit einer zentralen Steuereinrichtung (2) derart zur Datenkommunikation verbunden ist, dass die erste Sperreinrichtung (6) durch einen Befehl der Steuereinrichtung (2) geöffnet werden kann, einem an der ersten Sperreinrichtung (6) angeordneten Identifizierungselement (22) mit einem die Sperreinrichtung (6) eindeutig identifizierenden Identifikationsschlüssel, zumindest einem mobilen Kommunikationsgerät (20), welches zur Datenkommunikation mit der Steuereinrichtung (2) verbunden ist und zum Auslesen des Identifikationsschlüssels von dem Identifizierungselement (22) ausgebildet ist, wobei das mobile Kommunikationsgerät (20) und die Steuereinrichtung (2) derart zusammenwirken, dass der von dem Kommunikationsgerät (20) ausgelesene Identifikationsschlüssel von dem Kommunikationsgerät (20) an die Steuereinrichtung (2) übertragen wird, die Steuereinrichtung (2) oder das mobile Kommunikationsgerät (20) einen temporären Parkschlüssel generiert, und die Steuereinrichtung (2) in Reaktion auf ein von dem Kommunikationsgerät (20) an die Steuereinrichtung (2) gesendetes Anforderungssignal (6) die durch den Identifikationsschlüssel identifizierte erste Sperreinrichtung öffnet.

## Beschreibung

Die Erfindung betrifft ein Parkraum-Zufahrtskontrollsystem sowie ein Verfahren zur Kontrolle der Zufahrt in einem Parkraum.

Parkräume wie Parkhäuser oder Parkplätze, für welche ein Parkentgelt erhoben wird, sind üblicherweise mit Schranken abgesperrt, wobei beim Einfahren vor Öffnen der Einfahrtschranke ein Parkticket gezogen wird. Dieses muss dann vor der Ausfahrt an einer Kasse oder einem Kassenautomaten bezahlt werden, um anschließend die Ausfahrtschranke öffnen zu können. Es ist bekannt, ein solches Parkticket aus Papier durch einen elektronischen Sender, beispielsweise für Dauerparker, zu ersetzen. Darüber hinaus sind Systeme bekannt, bei welchen Mobiltelefone wie Smartphones als Ersatz für ein Parkticket genutzt werden. Dabei kommuniziert das Smartphone mit der Einfahrtschranke, welche dazu mit einer geeigneten Kommunikationseinrichtung und Software versehen sein muss. Dies macht derartige Systeme für den Betreiber eines Parkhauses bzw. Parkplatzes aufwendig und teuer. Ferner ist es bekannt, dass sich der Nutzer bei der Einfahrt in ein Parkhaus über bspw. ein Mobiltelefon identifiziert, wobei das Mobiltelefon hierzu bspw. eine Gerätekennung oder ein anderes Identifizierungsmerkmal an das die Schranken des Parkhauses steuernde System überträgt. Diese Anwendungen haben den Nachteil, dass persönliche Daten des Nutzers im Verwaltungssystem des Parkhauses gespeichert und verarbeitet werden müssen, was entsprechenden Speicherbedarf erfordert und darüber hinaus erhöhte Anforderungen an den Datenschutz stellt.

Es ist Aufgabe der Erfindung, ein verbessertes Parkraum-Zufahrtskontrollsystem sowie ein entsprechendes Verfahren zur Kontrolle der Zufahrt in einem Parkraum zu schaffen, welches auf vereinfachte Weise die Zufahrtskontrolle unter Verwendung von mobilen Kommunikationsgeräten wie Smartphones erlaubt und auf einfache Weise in bestehende Parkraum-Zufahrtskontrollsysteme integriert werden kann.

Diese Aufgabe wird durch ein Parkraum-Zufahrtskontrollsystem mit den in Anspruch 1 angegebenen Merkmalen sowie durch ein Verfahren mit den in Anspruch 16 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Parkraum-Zufahrtskontrollsystem dient dazu, Parkgebühren auf einem Parkplatz bzw. in einem Parkhaus zu erfassen bzw. zu kontrollieren, dass nur Berechtigte den Parkraum nutzen können. Das erfindungsgemäße Parkraum-Zufahrtskontrollsystem weist zumindest eine erste Sperreinrichtung, wie eine Schranke oder ein Tor auf, welche bevorzugt eine Zufahrt zu dem Parkplatz bzw. Parkhaus versperrt. Die erste Sperreinrichtung ist bevorzugt elektrisch angetrieben, sodass sie durch ein elektrisches Signal geöffnet und geschlossen werden kann. Dazu ist die zumindest eine erste Sperreinrichtung mit einer zentralen Steuereinrichtung so verbunden, dass eine Datenkommunikation zwischen der Steuereinrichtung und der ersten Sperreinrichtung möglich ist, welche es ermöglicht, einen Befehl von der Steuereinrichtung an die Sperreinrichtung zu senden, sodass diese öffnet. Vorzugsweise ist die erste Sperreinrichtung ebenfalls auf Befehl der Steuereinrichtung über die Kommunikationsverbindung schließbar. Alternativ oder zusätzlich kann die erste Sperreinrichtung in einer lokalen Steuerung eine automatische, z. B. zeitgesteuerte Schließfunktion aufweisen. Ferner ist es möglich, über Detektorelemente, wie Induktionsschleifen, die Durchfahrt eines Fahrzeuges zu erfassen und die Sperreinrichtung nach der Durchfahrt des Fahrzeuges automatisiert wieder zu schließen. Die Kommunikationsverbindung zwischen der zentralen Steuereinrichtung und der zumindest einen ersten Sperreinrichtung ist vorzugsweise als digitale Kommunikationsverbindung ausgebildet. Die Sperreinrichtung weist dazu eine lokale Steuerung auf, welche eine Kommunikationsschnittstelle beinhaltet. Die zentrale Steuereinrichtung weist eine korrespondierende Kommunikationsschnittstelle auf.

Es ist möglich, dass ein Parkplatz oder ein Parkhaus mehrere erste Sperreinrichtungen aufweist, welche vorzugsweise von einer gemeinsamen zentralen Steuereinrichtung gesteuert werden. Dies ist insbesondere dann der Fall, wenn der Parkplatz bzw. das Parkhaus mehrere Zufahrten hat, welche dann jeweils durch eine erste Sperreinrichtung versperrt werden.

Ferner ist an der zumindest ersten Sperreinrichtung ein Identifizierungselement angeordnet, welches einen die Sperreinrichtung eindeutig identifizierenden Identifikationsschlüssel enthält, welcher, wie nachfolgend beschrieben wird, auslesbar ist. Enthält das System mehrere erste Sperreinrichtungen, so weist jede erste Sperreinrichtung vorzugsweise ein individuelles Identifizierungselement auf, welches die jeweilige erste Sperreinrichtung durch einen eindeutigen Identifikationsschlüssel identifiziert. Das erfindungsgemäße System nutzt ferner zumindest ein mobiles Kommunikationsgerät, welches zur Datenkommunikation mit der Steuereinrichtung verbunden ist. Auch dies ist bevorzugt eine digitale Datenkommunikation, wozu das Kommunikationsgerät eine entsprechende Kommunikationsschnittstelle aufweist, welche mit der Kommunikationsschnittstelle der Steuereinrichtung über eine Kommunikationsverbindung kommunizieren kann. Ferner ist das mobile Kommunikationsgerät so ausgebildet, dass es den Identifikationsschlüssel von dem Identifizierungselement auslesen kann. Dies kann insbesondere optisch oder elektromagnetisch erfolgen. D. h. das Identifizierungselement stellt den Identifikationsschlüssel in geeigneter Weise bereit, so dass dieser von einem passenden Sensor des Kommunikationsgerätes ausgelesen bzw. erfasst werden kann. Dabei sind das Identifikationselement und das Kommunikationsgerät vorzugsweise so ausgebildet, dass das Auslesen bzw. Übertragen des Identifikationsschlüssels von dem Identifizierungselement auf das Kommunikationsgerät nur in einer beschränkten Reichweite möglich ist, vorzugsweise in einer Reichweite kleiner als fünf, bevorzugt kleiner als zwei Meter.

Das mobile Kommunikationsgerät und die Steuereinrichtung wirken ferner derart zusammen, dass der von dem Kommunikationsgerät ausgelesene Identifikationsschlüssel von dem Kommunikationsgerät über die Kommunikationsverbindung an die Steuereinrichtung übertragen wird und die Steuereinrichtung in Reaktion auf ein von dem Kommunikationsgerät an die Steuereinrichtung gesendetes Anforderungssignal die durch den Identifikationsschlüssel identifizierte erste Sperreinrichtung öffnet. Die Steuereinrichtung sendet dazu den entsprechenden Öffnen-Befehl über die Kommunikationsverbindung an die Sperreinrichtung.

Das erfindungsgemäße Parkraum-Zufahrtskontrollsystem ermöglicht es insbesondere, den Parkvorgang unter Verwendung eines mobilen Kommunikationsgerätes papierlos abzuwickeln, wobei der Nutzer bzw. das mobile Kommunikationsgerät für das System anonym bleiben kann, d. h. es müssen keine persönlichen Daten im System hinterlegt bzw. gespeichert werden. Dies vereinfacht zum einen den Systemaufbau, da die Menge der zu speichernden Daten gering gehalten werden kann. Zum anderen sind keine speziellen Anforderungen an den Datenschutz erforderlich, da keine personenbezogenen oder die Identifikation des Kommunikationsgerätes ermöglichende Daten übertragen und verarbeitet werden müssen.

Die Steuereinrichtung ist dazu ferner derart ausgebildet, dass sie nach Empfang des Anforderungssignals von dem mobilen Kommunikationsgerät und eines von dem mobilen Kommunikationsgerät übertragenen Identifikationsschlüssels einer eine Einfahrt versperrenden ersten Sperreinrichtung einen temporären Parkschlüssel generiert und an das Kommunikationsgerät sendet. Bevorzugt generiert die Steuereinrichtung den temporären Parkschlüssel aus dem von dem Kommunikationsgerät empfangenen Identifizierungsschlüssel und einem Zeitstempel. Alternativ kann auch das mobile Kommunikationsgerät so ausgebildet sein, dass ein temporärer Parkschlüssel, gegebenenfalls nach Anforderung durch die zentrale Steuereinrichtung in dem mobilen Kommunikationsgerät selber generiert wird und dann vorzugsweise über die Kommunikationsverbindung an die zentrale Steuereinrichtung übertragen wird. Unabhängig davon, wo der temporäre Parkschlüssel generiert wird, wird durch die Übertragung über die Kommunikationsverbindung sichergestellt, dass der temporäre Parkschlüssel sowohl der Steuereinrichtung als auch dem mobilen Kommunikationsgerät bekannt ist, sodass über den temporären Parkschlüssel eine Identifikation des mobilen Kommunikationsgerätes durch die Steuereinrichtung möglich wird. Der temporäre Parkschlüssel wird vorzugsweise so generiert, dass keinerlei persönliche Informationen des Nutzers und keinerlei spezifische Informationen des jeweiligen mobilen Kommunikationsgerätes verwendet werden. So kann der temporäre Parkschlüssel beispielsweise allein aus dem empfangenen Identifikationsschlüssel und einem Zeitstempel generiert werden. Insofern kann der Parkvorgang vollständig anonym abgewickelt werden. Der generierte temporäre Parkschlüssel dient als virtuelles Parkticket für die Abwicklung des Parkvorganges, insbesondere für einen späteren Bezahlvorgang und/oder zur Identifikation bei der Ausfahrt, d. h. an einer eine Ausfahrt versperrenden Sperreinrichtung. So erfolgt bei der weiteren Abwicklung des Parkvorganges, insbesondere beim Bezahlvorgang und bei der Ausfahrt, eine Identifikation des mobilen Kommunikationsgerätes durch die Steuereinrichtung vorzugsweise ausschließlich auf Grundlage des erzeugten temporären Parkschlüssels. So kann der temporäre Parkschlüssel alle Funktionen übernehmen, welche ein herkömmliches Parkticket aus Papier hat.

Wenn der temporäre Parkschlüssel aus dem Identifikationsschlüssel und dem aktuellen Zeitstempel generiert wird, wird so ein einmaliger, eindeutiger Parkschlüssel geschaffen, da es nicht sein kann, dass zwei Fahrzeuge gleichzeitig vor derselben ersten Sperreinrichtung, d. h. beispielsweise derselben Schranke eines Parkhauses, stehen und mit einem im Fahrzeug befindlichen Kommunikationsgerät gleichzeitig denselben Identifikationsschlüssel der Sperreinrichtung an die zentrale Steuereinrichtung übertragen.

Das mobile Kommunikationsgerät weist weiter bevorzugt einen Speicher auf und ist derart ausgebildet, dass es den temporären Parkschlüssel speichert. Dabei speichert das mobile Kommunikationsgerät den temporären Parkschlüssel vorzugsweise zumindest für die Dauer des gesamten Parkvorganges, d. h. bis zur Durchfahrt durch eine die Ausfahrt versperrende Sperreinrichtung und ermöglicht es so, den Nutzer während des gesamten Parkvorganges und gegebenenfalls auch für eine Bezahlvorgang eindeutig zu identifizieren. Dabei werden vorzugsweise, wie vorangehend beschrieben, keinerlei persönliche Daten des Nutzers und des Kommunikationsgerätes genutzt, sodass der Nutzer und sein Kommunikationsgerät vollständig anonym bleiben können.

Dieses beschriebene Zufahrtskontrollsystem ermöglicht es auf einfache Weise, über eine zentrale Steuereinrichtung eine Vielzahl von ersten Sperreinrichtungen in der beschriebenen Weise zu steuern. So weist das Zufahrtskontrollsystem bevorzugt eine Vielzahl von Sperreinrichtungen auf und ist darüber hinaus zur Zusammenarbeit mit einer Vielzahl mobiler Kommunikationsgeräte geeignet. Der Vorteil des erfindungsgemäßen Systems liegt darin, dass keine direkte Kommunikation zwischen dem Kommunikationsgerät und der Sperreinrichtung erforderlich ist, um den Öffnungsvorgang der Sperreinrichtung zu bewirken. Erfindungsgemäß ist vielmehr vorgesehen, dass die Sperreinrichtung, in deren Nähe sich das mobile Kommunikationsgerdt befindet, sich bei dem mobilen Kommunikationsgerät identifiziert. Das mobile Kommunikationsgerät überträgt dann den entsprechenden Identifikationsschlüssel an die zentrale Steuereinrichtung und meldet damit der zentralen Steuereinrichtung, an welcher Sperreinrichtung es sich gerade befindet. Die Steuereinrichtung weist einen Speicher bzw. eine Datenbank auf, in welcher die Identifikationsschlüssel der einzelnen Sperreinrichtungen hinterlegt sind, sodass die Steuereinrichtung erkennt, an welcher Sperreinrichtung sich das Kommunikationsgerät, welches den Identifikationsschlüssel übertragen hat, gerade befindet. So kann ein Fahrzeug an oder in dem sich das mobile Kommunikationsgerät befindet, vor genau einer bestimmten Sperreinrichtung erkannt werden und diese Sperreinrichtung kann dann auf Befehl der zentralen Steuereinrichtung geöffnet werden. Ein weiterer Vorteil des Systems ist, dass die Öffnen-Befehle ausschließlich von der zentralen Steuereinrichtung gegeben werden, sodass ein Missbrauch durch Manipulation einer lokalen Datenkommunikation zwischen einem mobilen Kommunikationsgerät und der Sperreinrichtung bzw. deren lokaler Steuerung ausgeschlossen ist.

Weiter bevorzugt weist das Parkraum- Zufahrtskontrollsystem zumindest eine zweite Sperreinrichtung auf, welche mit der zentralen Steuereinrichtung derart zur Datenkommunikation verbunden ist, dass die zweite Sperreinrichtung durch einen Befehl der Steuereinrichtung geöffnet werden kann. Die dazu erforderliche Datenkommunikation kann in derselben Weise ausgestaltet sein, wie sie für die erste Sperreinrichtung beschrieben ist. Die zweite Sperreinrichtung ist vorzugsweise eine Sperreinrichtung, welche eine Ausfahrt eines Parkhauses oder eines Parkplatzes versperrt. Auch hier können mehrere zweite Sperreinrichtungen in dem Parkraum-Zufahrtskontrollsystem vorhanden sein. An der zumindest einen zweiten Sperreinrichtung ist vorzugsweise ein Identifizierungselement mit einem diese Sperreinrichtung eindeutig identifizierenden Identifikationsschlüssel angeordnet, welcher von dem mobilen Kommunikationsgerät auslesbar und für eine Kommunikationsverbindung an die Steuereinrichtung übertragbar ist. Dies erfolgt in der gleichen Weise, wie oben anhand der ersten Sperreinrichtung und deren Identifizierungselement beschrieben wurde. Die Identifizierungselemente der zweiten Sperreinrichtungen sind in gleicher Weise ausgebildet.

Weiter bevorzugt ist die Steuereinrichtung derart ausgebildet, dass die Steuereinrichtung beim Empfang eines Identifikationsschlüssels einer eine Ausfahrt versperrenden zweiten Sperreinrichtung von dem mobilen Kommunikationsgerät den in dem Kommunikationsgerät gespeicherten temporären Parkschlüssel abruft und diese Sperreinrichtung nach Verifikation eines Bezahlvorganges für diese Gerätekennung oder diesen Parkschlüssel öffnet. Besonders bevorzugt handelt es sich bei dem Parkschlüssel um den vorangehend beschriebenen temporären Parkschlüssel. D. h. hier ist die Steuereinrichtung bevorzugt so ausgebildet, dass sie dann, wenn das mobile Kommunikationsgerät sich an der Sperreinrichtung der Ausfahrt meldet, zunächst verifiziert, ob für den jeweiligen durch den temporären Parkschlüssel gekennzeichneten Parkvorgang bezahlt wurde, und erst dann einen Befehl über die Kommunikationsverbindung an diese zweite Sperreinrichtung gibt, zu öffnen, wenn sichergestellt ist, dass der Bezahlvorgang abgeschlossen wurde. Anderenfalls wird wie bei herkömmlichen Parkscheinen die Ausfahrt verweigert. D. h. der temporäre Parkschlüssel wird hier analog zu einem herkömmlichen Parkticket genutzt.

Ein Bezahlvorgang kann beispielsweise direkt zwischen dem mobilen Kommunikationsgerät und der zentralen Steuereinrichtung oder auch in beliebiger anderer Weise, insbesondere direkt von der zentralen Steuereinrichtung abgewickelt werden. Beispielsweise ist eine Onlinezahlung, Zahlung mittels Kreditkarte oder ähnliches möglich. So ist es beispielsweise denkbar, dass in der zentralen Steuereinrichtung Bank- oder Kreditkartendaten für einen Nutzer hinterlegt werden und dieser dann über das mobile Kommunikationsgerät einen Bezahlbefehl über die Kommunikationsverbindung an die Steuereinrichtung senden kann, die dann mithilfe der hinterlegten Daten einen Bezahlvorgang vornimmt. Auch wäre es möglich, dass die erforderlichen Kreditkarten- oder Bankdaten in dem mobilen Kommunikationsgerät hinterlegt sind und für einen Bezahlvorgang an die Steuereinrichtung übertragen werden. Auch ein Bezahlvorgang über einen Drittanbieter ist denkbar.

Gemäß einer besonderen Ausführungsform der Erfindung ist jedoch alternativ oder zusätzlich ein Bezahlen mithilfe eines Bezahlterminals vorgesehen. Auch eine manuelle betätigte Kasse ist in entsprechender Weise einsetzbar. Insofern kann bei dem erfindungsgemäßen Bezahlsystem das "virtuelle Parkticket" gemäß dieser Ausführungsform in derselben Weise bezahlt werden, wie es bei herkömmlichen Parktickets möglich ist. Dazu ist bevorzugt zumindest ein Bezahlterminal vorgesehen, welches mit der Steuereinrichtung zur Datenkommunikation verbunden ist, und die Steuereinrichtung ist vorzugsweise derart ausgebildet, dass sie die zumindest eine zweite Sperreinrichtung bei Empfang des Anforderungssignals und nach Bestätigung eines Bezahlvorgangs von dem Bezahlterminal öffnet. Die Kommunikation zwischen Bezahlterminal und Steuereinrichtung kann in der oben beschriebenen Weise genauso funktionieren, wie die Kommunikation zwischen der Steuereinrichtung und den Sperreinrichtungen, d. h. insbesondere über eine Netzwerkverbindung und das Internet. So ist es möglich, dass der Nutzer beispielsweise mit seiner Bankkarte, Banknoten oder Münzen den Betrag an dem Bezahlterminal bezahlt, dieses den Bezahlvorgang über die Kommunikationsverbindung der Steuereinrichtung meldet und diese dann, wenn sie von dem zugehörigen mobilen Kommunikationsgerät ein Anforderungssignal zum Öffnen einer Ausfahrt-Sperreinrichtung, d. h. der zweiten Sperreinrichtung erhält, diese öffnet.

Um das Bezahlterminal oder eine Kasse in einem solchen System in einfacher Weise identifizieren zu können, ist es vorzugsweise vorgesehen, dass das Bezahlterminal mit der Steuereinrichtung in der vorangehend beschriebenen Weise zur Datenkommunikation verbunden ist und ein Identifizierungselement mit einem das Bezahlterminal eindeutig identifizierenden Identifikationsschlüssel aufweist, wobei das zumindest eine mobile Kommunikationsgerät zum Auslesen des Identifikationsschlüssel von dem Identifizierungselement ausgebildet ist und das mobile Kommunikationsgerät und die Steuereinrichtung derart zusammenwirken, dass der von dem Kommunikationsgerät ausgelesene Identifikationsschlüssel von dem Kommunikationsgerät an die Steuereinrichtung übertragen wird und die Steuereinrichtung das so identifizierte Bezahlterminal zur Durchführung eines Bezahlvorganges veranlasst. Das Identifizierungselement, welches an oder in dem Bezahlterminal angeordnet ist, kann in gleicher Weise ausgestaltet sein, wie die oben beschriebenen Identifizierungselemente der Sperreinrichtungen. Das bedeutet, wenn das mobile Kommunikationsgerät den Identifikationsschlüssel an dem Bezahlterminal empfangen hat und so ausgebildet ist, dass es diesen zusammen mit einem Bezahl-Anforderungssignal über die bestehende Datenverbindung an die Steuereinrichtung überträgt, kann die Steuereinrichtung, welche wiederum mit dem Bezahlterminal zur Datenkommunikation verbunden ist, das Bezahlterminal derart ansteuern, dass es den Bezahlvorgang veranlasst, d. h. dem Nutzer anzeigt, welcher Betrag zu entrichten ist und nach Bezahlung des Betrages an die Steuereinrichtung zurückmeldet, dass der Betrag bezahlt wurde. Gleichzeitig mit dem Identifikationsschlüssel des jeweiligen Bezahlterminals wird vorzugsweise der beschriebene Parkschlüssel, d. h. der temporärere Parkschlüssel an die Steuereinrichtung übertragen, um den Nutzer, für welchen der Bezahlvorgang durchgeführt werden soll, zu identifizieren. Wenn es sich dabei um einen anonymen Parkschlüssel handelt, wie er vorangehend beschrieben wurde, ist ein völlig anonymer Bezahlvorgang möglich, ohne dass der Steuereinrichtung nutzerspezifische Daten zugänglich gemacht werden müssen.

Ferner ist für die Abwicklung des Bezahlvorganges an einem solchen Bezahlterminal keine direkte bidirektionale Kommunikation zwischen dem Kommunikationsgerät und dem Bezahlterminal erforderlich, was die Manipulationsgefahr verringert und die Datensicherheit erhöht. Vielmehr erfolgen die erforderlichen Kommunikationen allein über die Datenverbindung zwischen dem mobilen Kommunikationsgerät und der Steuereinrichtung und der Steuereinrichtung und dem Bezahlterminal, welches hierfür ebenfalls mit einer in geeigneter Weise ausgestalteten Kommunikationsschnittstelle versehen ist. Diese Kommunikationsschnittstelle kann ebenfalls eine Netzwerkschnittstelle in der vorangehend anhand der Sperreinrichtungen beschriebenen Ausgestaltung sein. Dadurch, dass für die Steuereinrichtung das Bezahlterminal über das Identifizierungselement identifiziert wird, ist es, wenn eine Vielzahl von Bezahlterminals vorgesehen ist, somit für den Nutzer möglich, den Bezahlvorgang an einem beliebigen Bezahlterminal durchzuführen. Zur eindeutigen Identifikation kann es dazu ebenfalls sinnvoll sein, in dem Kommunikationsgerät den Abstand eines Funksenders, welcher das Identifizierungselement bildet, zu erfassen und nur ein Identifizierungselement zu berücksichtigen, welches in einem ausreichend geringen Abstand gelegen ist. So wird es bei einer Mehrzahl von nebeneinanderstehenden Bezahlterminals möglich, genau das Bezahlterminal zu identifizieren, vor welchem der Nutzer steht.

Das Identifizierungselement ist vorzugsweise ein Funksender, insbesondere nach dem Bluetooth-Low-Energy-Standard (BLE) und das Kommunikationsgerät weist bevorzugt einen korrespondierenden Funkempfänger auf. Bei dem Funkempfänger des Kommunikationsgerätes handelt es sich um eine übliche Bluetooth-Schnittstelle, welche heutzutage z. B. in Mobiltelefonen standardmäßig vorgesehen ist. Identifizierungselemente nach dem Bluetooth-Low-Energy-Standard sind als sogenannte "Beacons" bekannt und senden kontinuierlich wiederholend ein Funksignal mit geringer Reichweite, welches den Identifikationsschlüssel enthält. Ein solches Identifikationselement hat lediglich einen sehr geringen Energiebedarf, sodass auch eine Energieversorgung mittels Batterien möglich ist. Vor allem ist jedoch ein solches Identifizierungselement völlig unabhängig von der lokalen Steuerung der Sperreinrichtung, da es als autonomes System lediglich die Aufgabe hat, kontinuierlich den Identifikationsschlüssel auszusenden. Eine weitere Kommunikation oder direktes Zusammenwirken mit einer lokalen Steuerung der jeweiligen ersten oder zweiten Sperreinrichtung ist in dem erfindungsgemäßen System nicht vorgesehen. Dies hat den Vorteil, dass ein solches Identifizierungselement ohne Weiteres in bestehenden Anlagen nachgerüstet werden kann, ohne Veränderungen in der vorhandenen lokalen Anlagensteuerung der Sperreinrichtung vornehmen zu müssen. Ggf. ist lediglich eine Energieversorgung für das Identifizierungselement anzuschließen. Darüber hinaus kann ein solches Bluetooth-Signal mit einem Standard-Mobiltelefon wie einem Smartphone empfangen werden, wenn das Smartphone sich in ausreichender Nähe zu dem Funksender des Identifizierungselementes befindet. Durch eine geeignete Applikation in dem mobilen Kommunikationsgerät kann auch der Abstand bzw. die Entfernung zu dem Funksensor bestimmt werden, sodass das Kommunikationsgerät so ausgebildet sein kann, dass es den Identifikationsschlüssel nur dann an die zentrale Steuereinrichtung überträgt, wenn sich das Identifizierungselement in einem vorbestimmten oder geringeren Abstand zu dem Kommunikationsgerät befindet. So können Fehlfunktionen vermieden werden, wenn beispielsweise mehrere erste Sperreinrichtungen an der Einfahrt eines Parkhauses nebeneinander angeordnet sind. Wenn der Grenzwert für den Abstand ausreichend klein gewählt ist, beispielsweise kleiner als 2 oder kleiner als 1 Meter kann sichergestellt werden, dass das Kommunikationsgerät nicht versehentlich den Identifikationsschlüssel einer benachbarten Sperreinrichtung anstatt derjenigen Sperreinrichtung, vor der sich das Fahrzeug mit dem Kommunikationsgerät befindet, an die Steuereinrichtung sendet.

Die zumindest eine Sperreinrichtung (erste und/oder zweite Sperreinrichtung) ist mit der Steuereinrichtung vorzugsweise über ein Datennetzwerk, insbesondere über das Internet, verbunden. Dies ermöglicht es, die Steuereinrichtung in großer Entfernung zu der Sperreinrichtung zu platzieren. Die Sperreinrichtung weist, wie oben beschrieben, eine lokale Steuerung mit einer entsprechenden Kommunikationsschnittstelle auf, um die Kommunikation über das Datennetzwerk zu ermöglichen. Die Kommunikationsschnittstelle kann eine übliche Netzwerkanbindung, d. h. beispielsweise ein WLAN- oder Ethernetanschluss sein, welcher es ermöglichen, die Kommunikationseinrichtung über ein Computernetzwerk und insbesondere das Internet mit der Steuereinrichtung zur Kommunikation zu verbinden. Die Steuereinrichtung ist vorzugsweise ein Serversystem, welches insbesondere so ausgebildet sein kann, dass es eine Vielzahl von Parkräumen mit einer Vielzahl von Sperreinrichtungen zentral steuert.

Das zumindest eine mobile Kommunikationsgerät ist mit der Steuereinrichtung vorzugsweise über ein Datennetzwerk, insbesondere über ein Mobilfunknetz und/oder das Internet verbunden. Bevorzugt erfolgt die Verbindung zum Internet über ein Mobilfunknetz. Dies ermöglicht es, dass das Kommunikationsgerät von nahezu jedem beliebigen Ort aus mit der zentralen Steuereinrichtung kommunizieren kann. Besonders vorteilhaft ist dabei, dass auf bestehende Kommunikationssysteme zurückgegriffen werden kann, sodass für diese Kommunikationsverbindung in dem erfindungsgemäßen Zufahrtskontrollsystem keine zusätzlichen Hardwarestrukturen aufgebaut werden müssen, sodass diesbezügliche Investitionen überflüssig sind. So lässt sich das erfindungsgemäße Zufahrtskontrollsystem sehr leicht in bestehende Strukturen integrieren oder nachrüsten.

Besonders bevorzugt ist das zumindest eine mobile Kommunikationsgerät ein Mobiltelefon oder ein in ein Fahrzeug integriertes Kommunikationsgerät. Bei dem Mobiltelefon kann es sich um ein Standard-mobiltelefon, insbesondere ein Smartphone, handeln. Ein solches Gerät weist die erforderliche Kommunikationsschnittstelle zur Anbindung an das Mobilfunknetz auf. Darüber hinaus weisen derartige Mobiltelefone üblicherweise Bluetooth-Schnittstellen auf, welche den Empfang eines Identifikationsschlüssels von einem Bluetooth-Low-Energy-Funksender als Identifizierungselement ohne Weiteres ermöglichen. Insofern ist hier keine spezielle Hardware erforderlich, um den Identifikationsschlüssel in der vorangehend beschriebenen Weise auszulesen. Wenn das mobile Kommunikationsgerät ein in ein Fahrzeug integriertes Kommunikationsgerät ist, so kann es sich dabei um eine Kommunikationseinrichtung, ein Navigationssystem oder Entertainmentsystem handeln, welches in das Fahrzeug integriert ist. In modernen Fahrzeugen sind häufig integrierte Systeme vorgesehen, welche Kommunikation, Navigation und Unterhaltungsfunktionen in einem Gerät integrieren. Diese Geräte weisen in der Regel eine eigene Mobilfunkschnittstelle auf, um beispielsweise den Empfang von Verkehrsdaten, Navigationsdaten und Ähnlichem zu ermöglichen oder greifen auf ein angeschlossenes Mobiltelefon zur Kommunikation, insbesondere auch Datenkommunikation über das Internet zu. Ferner weisen diese Systeme häufig auch Bluetooth-Schnittstellen auf, um die Anbindung von Mobiltelefonen zu ermöglichen. Eine solche Bluetooth-Schnittstelle kann ebenfalls dazu genutzt werden, einen Identifikationsschlüssel von einem Bluetooth-Low-Energy-Funksender, wie er vorangehend beschrieben wurde, zu empfangen. So können die für das erfindungsgemäße Zufahrtskontrollsystem erforderlichen Funktionen bevorzugt als Softwareapplikation in ein solches in ein Fahrzeug integriertes Kommunikationsgerät oder ein Mobiltelefon implementiert werden. Dies hat den Vorteil, dass der Nutzer des erfindungsgemäßen Zufahrtskontrollsystem, welcher beispielsweise in ein Parkhaus einfahren will, keine spezielle Hardware benötigt, sondern die ohnehin vorhandene Fahrzeugelektronik oder sein Mobiltelefon auf einfache Weise entsprechend aufrüsten kann, sodass er die beschriebenen Funktionen des Zufahrtskontrollsystems nutzen kann.

Wie beschrieben ist das mobile Kommunikationsgerät bevorzugt ein übliches Mobiltelefon, in welches die für das erfindungsgemäße Zufahrtskontrollsystem erforderlichen Funktion durch eine Software-Applikation, eine sogenannte "App" integriert sind. Ein solches Mobiltelefon kann beispielsweise ein mit dem Android-, IOS- oder Windows-Betriebssystem arbeitendes Mobiltelefon sein. Diese Betriebssysteme sind, wie auch andere Smartphone-Betriebssysteme dafür ausgelegt, dass zusätzliche Software-Applikationen installiert werden können. Eine solche Software-Applikation kann dann auf die in dem Mobiltelefon vorhandenen Schnittstellen, insbesondere die Bluetooth-Schnittstelle und die Mobilfunk-Schnittstelle zugreifen, um die hier beschriebenen Funktionen zu realisieren.

Weiter bevorzugt sind die zentrale Steuereinrichtung und das mobile Kommunikationsgerät bzw. die die Funktionen des mobilen Kommunikationsgerätes bereitstellende Software so ausgebildet, dass eine bidirektionale Datenkommunikation zwischen dem mobilen Kommunikationsgerät und der Steuereinrichtung erfolgt. So können nicht nur Daten, wie beispielsweise der erfasste Identifikationsschlüssel in Richtung von dem Kommunikationsgerät zu der Steuereinrichtung, sondern auch in umgekehrter Richtung übertragen werden, beispielsweise um einen Bezahlvorgang für das Parken direkt zwischen dem Kommunikationsgerät und der Steuereinrichtung abzuwickeln.

Das Identifizierungselement und das zumindest eine mobile Kommunikationsgerät sind hingegen bevorzugt für eine unidirektionale Kommunikation zwischen dem Identifizierungselement und dem Kommunikationsgerät ausgebildet. D. h. bevorzugt werden von dem Kommunikationsgerät keinerlei Daten zu der jeweiligen Sperreinrichtung (erste oder zweite Sperreinrichtung), deren lokaler Steuerung oder dem Identifizierungselement übertragen. Es erfolgt, wie oben beschrieben, bevorzugt lediglich der Empfang bzw. ein Auslesen des Identifikationsschlüssels aus dem Identifizierungselement. D. h. von dem Kommunikationsgerät werden lokal keine Daten übertragen, was eine zusätzliche Datensicherheit bietet.

Gemäß einer weiteren bevorzugten Ausführungsform ist an der zumindest einen ersten Sperreinrichtung und/oder der zumindest einen zweiten Sperreinrichtung zumindest ein Detektor angeordnet, welcher mit der Steuereinrichtung zur Datenkommunikation verbunden ist und zur Detektion eines vor der Sperreinrichtung stehenden Fahrzeuges ausgebildet ist. Eine solche Detektoreinrichtung kann beispielsweise eine Induktionsschleife in der Fahrbahn sein, welche ein Fahrzeug erfasst. Bevorzugt sind an der Sperreinrichtung mehrere derartige Detektoreinrichtungen vorhanden, welche zusätzlich die Durchfahrt des Fahrzeuges erfassen können. Derartige Detektoren können direkt an eine lokale Steuerung der Sperreinrichtung angeschlossen sein und Signale, welche beispielsweise das Vorhandensein eines Fahrzeuges vor oder hinter der Sperreinrichtung signalisieren, über die Sperreinrichtung bzw. deren lokale Steuerung in der oben beschriebenen Weise an die zentrale Steuereinrichtung übertragen. Diese Datenkommunikation erfolgt bevorzugt ebenfalls in der beschriebenen Weise über das Internet. Statt die Detektoreinrichtungen an die lokalen Steuerungen der Sperreinrichtungen anzubinden, könnten die Detektoreinrichtungen auch selber mit Detektorsteuerungen versehen sein, welche Kommunikationsschnittstellen zur direkten Anbindung an ein Datennetzwerk und vorzugsweise das Internet zur Datenübertragung an die Steuereinrichtung aufweisen.

Neben dem vorangehend beschriebenen Parkraum-Zufahrtskontrollsystem ist Gegenstand der Erfindung auch ein entsprechendes Verfahren zur Zufahrtskontrolle in einen Parkraum, wobei das Verfahren folgende Schritte aufweist:
- Auslesen eines Identifikationsschlüssels einer eine Zufahrt versperrenden ersten Sperreinrichtung durch ein mobiles Kommunikationsgerät,
- Übertragen des ausgelesenen Identifikationsschlüssels von dem mobilen Kommunikationsgerät an eine zentrale Steuereinrichtung,
- Übertragen eines Anforderungssignals zur Anforderung des Öffnens der Sperreinrichtung von dem Kommunikationsgerät an die zentrale Steuereinrichtung,
- Generieren eines temporären Parkschlüssels in der Steuereinrichtung oder dem mobilen Kommunikationsgerät und
- Öffnen der durch den Identifikationsschlüssel identifizierten Sperreinrichtung durch die zentrale Steuereinrichtung in Reaktion auf das Anforderungssignal.

Es ist zu verstehen, dass der Identifikationsschlüssel und das Anforderungssignal nacheinander oder aber auch gleichzeitig übertragen werden können. Wenn der temporäre Parkschlüssel in der Steuereinrichtung generiert wird, wird er anschließend über die Datenverbindung an das mobile Kommunikationsgerät übertragen, sodass der temporäre Parkschlüssel beiden Seiten des Systems bekannt ist und im Anschluss zur Identifikation des mobilen Kommunikationsgerätes verwendet werden kann, d. h. als virtuelles Parkticket fungieren kann. Wenn umgekehrt der temporäre Parkschlüssel in dem mobilen Kommunikationsgerät erzeugt wird, wird er im Anschluss an die zentrale Steuereinrichtung übertragen, sodass auf diese Weise ebenfalls beide Seiten der temporäre Parkschlüssel bekannt ist. Die Übertragung eines temporären Parkschlüssels, welcher im mobilen Kommunikationsgerät erzeugt worden ist, kann bspw. gemeinsam mit dem Anforderungssignal erfolgen oder auch selber als Anforderungssignal fungieren. Das mobile Kommunikationsgerät kann später den temporären Parkschlüssel zur Identifikation an einem Bezahlterminal oder einer eine Ausfahrt versperrenden zweiten Sperreinrichtung an die Steuereinrichtung übertragen werden. Bezüglich des weiteren Verfahrensablaufs und möglicher bevorzugter Ausgestaltungen und Details wird auf die vorangehende Beschreibung des Zufahrtkontrollsystems verwiesen, aus welcher sich der entsprechende Verfahrensablauf ebenfalls ergibt.

Vorzugsweise weist das erfindungsgemäße Verfahren folgende weitere Schritte auf:
- Auslesen eines Identifikationsschlüssels einer eine Ausfahrt versperrenden zweiten Sperreinrichtung durch das mobile Kommunikationsgerät,
- Übertragen des ausgelesenen Identifikationsschlüssels von dem mobilen Kommunikationsgerät an die zentrale Steuereinrichtung,
- Übertragen eines Anforderungssignals mit dem temporären Parkschlüssel zur Anforderung des Öffnens der zweiten Sperreinrichtung von dem Kommunikationsgerät an die zentrale Steuereinrichtung,
- Verifikation eines Bezahlvorganges für den empfangenen temporären Parkschlüssel durch die Steuereinrichtung und
- Öffnen der durch den Identifikationsschlüssel identifizierten zweiten Sperreinrichtung durch die zentrale Steuereinrichtung bei erfolgreicher Verifikation.

Auf diese Weise wird bei dem Verfahren die Ausfahrt aus dem Parkraum, d. h. einem Parkhaus bzw. Parkplatz kontrolliert. Die zweite Sperreinrichtung, welche die Ausfahrt versperrt, wird nur dann freigegeben, wenn von der Steuereinrichtung sichergestellt ist, dass die Parkzeit bezahlt wurde. Die Bezahlung kann dabei auf verschiedene Weise, wie sie vorangehend beschrieben wurde, erfolgen. Auch ist es möglich, den Bezahlvorgang direkt in den beschriebenen Verfahrensablauf, d. h. in den Verifikationsvorgang des Bezahlvorganges zu integrieren. Dies bietet sich insbesondere dann an, wenn der Bezahlvorgang in der oben beschriebenen Weise direkt über das mobile Kommunikationsgerät oder hinterlegte Bankdaten erfolgen soll. Alternativ ist es möglich, den Bezahlvorgang über ein Bezahlterminal in der vorangehend beschriebenen Weise abzuwickeln. Dann überprüft die Steuereinrichtung wie bei einem herkömmlichen Parkticket, ob für den hinterlegten temporären Parkschlüssel die Parkzeit bezahlt wurde, bevor die zweite Sperreinrichtung, welche die Ausfahrt versperrt, geöffnet wird.

Die Steuereinrichtung öffnet bevorzugt eine Sperreinrichtung nur dann, wenn von einem Detektor ein vor dieser Sperreinrichtung stehendes Fahrzeug erkannt wird. Ein solcher Detektor kann beispielsweise, wie vorangehend beschrieben, eine Induktionsschleife sein. Durch dieses Vorgehen ist sichergestellt, dass die Sperreinrichtung beispielsweise nicht für einen Fußgänger öffnet.

Hinsichtlich des beschriebenen Verfahrens ist zu verstehen, dass Merkmale, welche nur anhand des Verfahrens beschrieben sind, in entsprechender Weise auch in dem Zufahrtskontrollsystem umgesetzt sein können, und umgekehrt.

Grundgedanke sowohl des Zufahrtkontrollsystems als auch des Verfahrens ist es, bestehende Kommunikationsstrukturen, welche es in bestehenden Parkraum-Zufahrtskontrollsystemen schon gibt, nämlich Kommunikationsverbindungen zwischen Bezahlterminals, Sperreinrichtungen und einer zentralen Steuereinrichtung zu nutzen, um die Zufahrtskontrolle und gegebenenfalls einen Bezahlvorgang über ein mobiles Kommunikationsgerät, wie beispielsweise ein Mobiltelefon abzuwickeln. Um dies zu ermöglichen, sind lediglich zusätzliche Softwareapplikationen und eine Kommunikationsmöglichkeit des Mobiltelefons mit dem Internet erforderlich. Im Parkhaus bzw. auf dem jeweiligen Parkplatz sind keine zusätzlichen Kommunikationsstrukturen aufzubauen. Es sind lediglich die beschriebenen Identifizierungselemente an den jeweiligen Komponenten des Systems, beispielsweise den Sperreinrichtungen und gegebenenfalls den Bezahlterminals, anzubringen. Alle übrigen Bestandteile des Systems bzw. des Verfahrens können mit den herkömmlichen Kommunikationsverbindungen und Strukturen umgesetzt werden. Dies ist ein großer Vorteil für die Nachrüstung des Systems in vorhandenen Systemen. Die Verwendung der Identifizierungselemente wie Bluetooth-Funksender hat darüber hinaus den Vorteil, dass eine sehr genaue Lokalisierung des jeweiligen Kommunikationsgerätes in der Nähe des jeweiligen Identifizierungselementes möglich ist. So ist es nicht erforderlich, auf GPS-Standortdaten des mobilen Kommunikationsgerätes zurückzugreifen, was die Verwendung auch in geschlossenen Räumen ermöglicht und darüber hinaus eine wesentlich höhere Genauigkeit ermöglicht, da der relative Standort der Kommunikationseinrichtung relativ zu dem Identifizierungselement auf Dezimeter genau erfasst werden kann. Weiterer wesentlicher Gedanke ist, für jeden Parkvorgang einen temporären Parkschlüssel zu generieren, welche für die weitere Abwicklung des Parkvorganges als Identifizierungselement für den jeweiligen Nutzer Verwendung findet. Auf diese Weise wird verhindert, dass es erforderlich ist, personenbezogene Daten zu speichern und zu verarbeiten. Der temporäre Parkschlüssel kann nach Abwicklung des gesamten Parkvorganges, d. h. nach Öffnen der zweiten Sperreinrichtung, welche die Ausfahrt versperrt, zumindest auf dem mobilen Kommunikationsgerät wieder gelöscht werden. Auch in der zentralen Steuereinrichtung kann der Schlüssel gelöscht werden. Allerdings kann es zu Dokumentationszwecken hier sinnvoll sein, die jeweiligen Schlüssel auch längerfristig zu speichern.

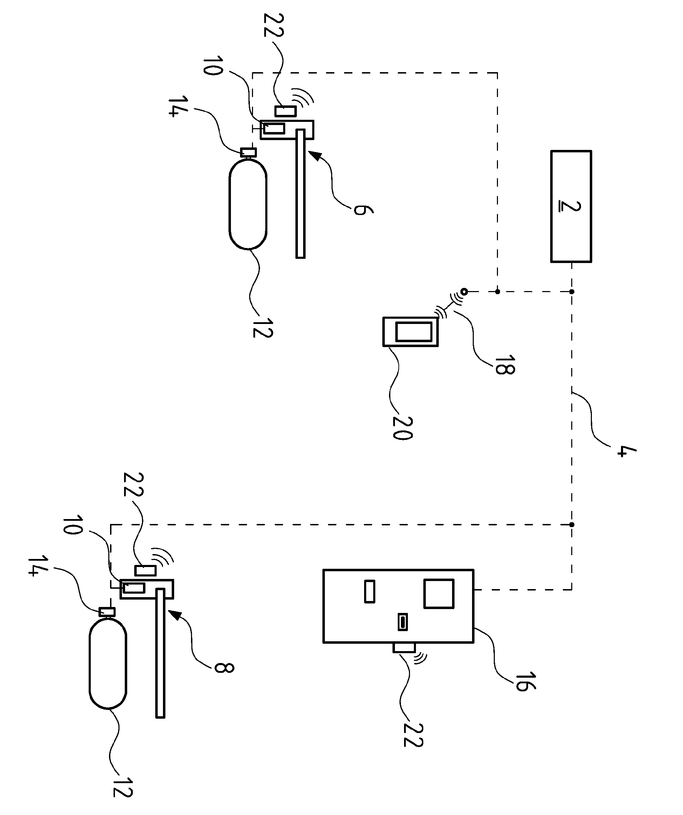

Nachfolgend wird die Erfindung beispielhaft anhand der beigefügten Figur beschrieben. Diese zeigt schematisch ein erfindungsgemäßes Parkraum-Zufahrtskontrollsystem.

Das in der Figur gezeigte Parkraum-Zufahrtskontrollsystem weist als zentrale Steuereinrichtung einen Server auf, welcher über das Internet 4 oder ein anderes geeignetes Computernetzwerk mit zwei gezeigten ersten und zweiten Sperreinrichtungen in Form von Schranken 6 und 8 zur Datenkommunikation verbunden ist, wobei die Schranke 6 als Einfahrtschranke (eine erste Sperreinrichtung) beispielsweise eines Parkhauses und die Schranke 8 als Ausfahrtschranke (eine zweite Sperreinrichtung) fungiert. Es ist zu verstehen, dass eine Vielzahl von entsprechenden Schranken 6, 8 mit dem Server 2 verbunden sein kann. Auch ist die Anbindung der Schranken 6, 8 verschiedener Parkhäuser an einem gemeinsamen Server 2 über das Internet 4 möglich.

Die Schranken 6 und 8 weisen jeweils eine lokale Steuerung 10 auf, welche eine Kommunikationsschnittstelle zur Anbindung an das Datennetzwerk, wie das hier gezeigte Internet 4, aufweisen. So können die lokalen Steuerungen 10 über das Internet 4 mit dem Server 2 kommunizieren und insbesondere von dem Server 2 Befehle zum Öffnen und Schließen der Schranken 6, 8 empfangen. Die Schranken 6, 8 weisen darüber hinaus jeweils eine Detektoreinrichtung in Form einer Induktionsschleife 12 auf, welche über eine Auswertelektronik 14 entweder direkt mit der lokalen Steuerung 10 der jeweiligen Schranke 6, 8 oder aber direkt über das Internet 4 mit dem Server 2 kommunizieren kann. So kann die Auswerteelektronik 14 ein Signal an den Server 2 übertragen, ob vor der jeweiligen Schranke 6, 8 ein Fahrzeug steht oder nicht.

Das System weist darüber hinaus ein oder mehrere Bezahlterminals 16 auf, von welchen in der Figur lediglich eines gezeigt ist. Bei dem Bezahlterminal 16 kann es sich um einen Kassenautomat bekannter Ausgestaltung handeln, welcher einen Münzeinwurf, eine Banknotenannahme sowie gegebenenfalls Einrichtungen zum Bezahlen mittels Kredit- oder Bankkarte aufweist. Das Bezahlterminal 16 ist ebenfalls mit dem Internet 4 verbunden und kann über dieses mit dem Server 2 kommunizieren. So kann insbesondere der Server 2 dem Bezahlterminal 16 übermitteln, welche Beträge zu kassieren sind, und das Bezahlterminal 16 kann den erfolgten Bezahlvorgang an den Server 2 zurückmelden.

Schließlich ist der Server 2 über das Internet 4 auch an ein Mobilfunknetz 18 angebunden, über welches Mobiltelefone 20 drahtlos auf das Internet 4 zugreifen können. In der Figur ist lediglich ein Mobiltelefon 20 (mobiles Kommunikationsgerät) gezeigt, es ist jedoch zu verstehen, dass eine Vielzahl von Mobiltelefonen auf diese Weise mit dem Server 2 kommunizieren kann. Die Mobiltelefone, bei welchen es sich um sogenannte Smartphones handelt, sind mit einer entsprechenden Softwareapplikation für das Parkraum-Zufahrtskontrollsystem, das heißt einer entsprechenden App ausgerüstet, welche die erforderlichen Kommunikationsvorgänge steuert bzw. durchführt.

Darüber hinaus sind an den Schranken 6, 8 sowie dem Bezahlterminal 16 Identifikationselemente in Form von Funksendern angeordnet, welche nach dem Bluetooth-Low-Energy Standard arbeiten und kontinuierlich widerholend einen Identifikationsschlüssel, welcher sie eindeutig identifiziert, aussenden. Bei diesen Funksendern 22 handelt es sich um sogenannte Beacons. Die Identifikationsschlüssel dieser Funksender 22 sind in einer Datenbank in dem Server 2 hinterlegt, sodass der Server 2 eine Zuordnung hat, welches Bauteil welchen Identifikationsschlüssel hat. Die Funksender 22 stellen autonome Bauteile dar, welche nicht mit den weiteren Steuereinrichtungen der Schranken 6, 8 sowie des Bezahlterminals 16 kommunizieren oder zusammenwirken. Lokal an der Stelle ihrer Anordnung benötigen die Funksender 22 lediglich eine Energieversorgung, welche entweder durch Anbindung an das Stromnetz oder gegebenenfalls auch Batterien erfolgen kann. So lassen sich die Funksender 22 sehr leicht in die Einrichtungen wie Schranken 6, 8 und Bezahlterminals 16 integrieren und gegebenenfalls auch in bestehende Anlagen nachrüsten. Die Applikation auf den Mobiltelefonen 20 nutzt einen Bluetoothempfänger in dem Mobiltelefon 20, um die Signale der Funksender 22 zu empfangen und so den Identifikationsschlüssel des jeweiligen Funksenders 22 auszulesen.

Der Ablauf eines Parkvorganges in dem gezeigten System erfolgt nun wie folgt. Wenn ein Fahrzeug, dessen Nutzer ein Mobiltelefon 20 mit der erforderlichen Softwareapplikation bei sich führt, sich der Einfahrtschranke 6 nähert, erfasst die Induktionsschleife 22 das Fahrzeug vor der Schranke 6 und meldet dies der der Auswertelektronik 14 und über das Internet 4 an den Server 2. Gleichzeitig empfängt in dieser Position das Mobiltelefon 20 das Signal von dem Funksender 22 an der Einfahrtschranke und liest so dessen Identifikationsschlüssel aus. Der so empfangene Identifikationsschlüssel wird von dem Mobiltelefon 20 über das Mobilfunknetz 18 und das Internet 4 dem Server 2 übermittelt. Der Server 2 kann nun in umgekehrter Richtung über das Internet 4 und das Mobilfunknetz 18 der Applikation auf dem Mobiltelefon 20 einen Befehl übersenden, welcher die Anfrage ausgibt, ob der Nutzer in das Parkhaus einfahren will. Bestätigt der Nutzer dies, sendet das Mobiltelefon 20 wiederum über das Mobilfunknetz 18 und das Internet 4 ein Anforderungssignal an den Server 2 mit dem Wunsch in das Parkhaus einzufahren. Durch die Übermittlung des Identifikationsschlüssels des zugehörigen Funksenders 22 ist dem Server 2 bekannt, vor welcher Schranke sich der Nutzer mit dem Mobiltelefon 20 befindet und kann diese Einfahrtschranke 6, durch Übermittlung eines entsprechenden Befehls über das Internet 4 an die lokale Steuerung der Schranke 10 veranlassen zu öffnen. Ferner generiert der Server 2 einen temporären Parkschlüssel, welcher ein virtuelles Parkticket darstellt und übermittelt diesen über das Internet 4 und das Mobilfunknetz 18 an das Mobiltelefon 20, in welchem dieser Parkschlüssel gespeichert wird. Der temporäre Parkschlüssel wird vorzugsweise aus dem Identifikationsschlüssel des Funksenders 22, welcher von dem Mobiltelefon 20 an der Einfahrtschranke 6 erfasst wurde und einen Zeitstempel generiert. Dies ist eine eindeutige Identifikation, da sich nur ein Fahrzeug zum selben Zeitpunkt vor derselben Schranke befinden kann. Gleichzeitig kann der Server 2 in seiner internen Datenbank speichern, dass der Nutzer mit diesem nun generierten temporären Parkschlüssel zu einer bestimmten Uhrzeit, zu welcher die Einfahrtschranke 6 von dem Server 2 in der beschriebenen Weise geöffnet wurde, in das Parkhaus eingefahren ist. Nach der Einfahrt des Fahrzeuges wird die Schranke 6 in bekannter Weise wieder geschlossen, was über eine zweite, hier nicht gezeigte, Induktionsschleife oder zeitgesteuert erfolgen kann.

Wenn der Nutzer den Parkraum bzw. das Parkhaus nun wieder verlassen will, muss er zunächst seine Parkzeit bezahlen. Dazu kann er bei dem hier gezeigten System mit seinem Mobiltelefon 20 zu dem Bezahlterminal 16 gehen. Dieses ist ebenfalls mit einem Funksender 22 ausgestattet. Befindet sich der Nutzer vor dem Bezahlterminal 16 kann er an der Applikation an seinem Mobiltelefon 20 den Wunsch, nun die Parkzeit zu bezahlen, eingeben, woraufhin das Mobiltelefon 20 den Identifikationsschlüssel des Funksenders 22 an dem Bezahlterminal 16 empfängt und den Bezahlwunsch mit diesem Identifikationsschlüssel über das Mobilfunknetz 18 und das Internet 4 an den Server 2 übermittelt. Zusammen mit dem Bezahlwunsch überträgt das Mobiltelefon 20 ebenfalls den temporären Parkschlüssel. Im Server 2 kann nun anhand der aktuellen Uhrzeit und der gespeicherten Einfahrtzeit die Parkdauer ermittelt werden und durch den empfangenen Identifikationsschlüssel festgestellt werden, an welchem Bezahlterminal 16 sich der Nutzer mit dem Mobiltelefon 20 gerade befindet. Der Server 2 überträgt nun an dieses so identifizierte Bezahlterminal 16 die erforderlichen Preisinformationen und den Befehl einen Bezahlvorgang zu starten. Das Bezahlterminal 16 bringt darauf hin den zu bezahlenden Betrag zur Anzeige und führt einen Bezahlvorgang durch, welcher in herkömmlicher Weise mittels Bargeld oder Bank- oder Kreditkarte von dem Nutzer abgewickelt werden kann. Anschließend bestätigt das Bezahlterminal 16 durch ein entsprechendes Signal über das Internet 4 an den Server 2 dass der Bezahlvorgang abgeschlossen ist und der Server 2 speichert den Zeitpunkt des Bezahlvorganges zusammen mit dem Parkschlüssel.

Anschließend kann der Nutzer mit dem Mobiltelefon 20 mit seinem Fahrzeug zu der Ausfahrtsschranke 8 fahren. Dort empfängt das Mobiltelefon 20 ein Signal mit einem Identifikationsschlüssel des Funksenders 22 an der Ausfahrtschranke 8 und überträgt wiederrum den temporären Parkschlüssel und den Identifikationsschlüssel des Funksenders 22 der Ausfahrtsschranke 8 über das Internet 4 an den Server 2. Gleichzeitig kann die Induktionsschleife 12 über die Auswertelektronik 14 an den Server 2 melden, dass sich tatsächlich ein Fahrzeug vor der Ausfahrtsschranke 8 befindet. Der Server 2 prüft nun, ob für den empfangenen Parkschlüssel ein Bezahlvorgang durchgeführt wurde. Falls ja sendet er nun an diejenige Ausfahrtsschranke 8, deren Identifikationsschlüssel er von dem Mobiltelefon 20 empfangen hat, ein Signal, die Ausfahrtsschranke 8 zu öffnen und der Nutzer kann aus dem Parkraum ausfahren. Der temporäre Parkschlüssel kann nun auf dem Mobiltelefon 20 automatisiert gelöscht werden.

Es ist zu erkennen, dass für den Fall, dass der Nutzer an dem Bezahlterminal 16 eine Barzahlung vornimmt, der gesamte Parkvorgang einschließlich des Bezahlvorganges vollständig anonym ausgeführt werden kann, da keinerlei Nutzerdaten oder spezifische Daten des jeweiligen Mobiltelefons 20 von dem Server 2 erfasst oder gespeichert werden müssen. Lediglich für einen Bezahlvorgang über Bankverbindungen, Kreditkarte oder ähnliches sind entsprechende Nutzerdaten zu erfassen. Eine solche Bezahlung kann ebenfalls an dem Bezahlterminal 16, oder aber auch direkt über das Mobiltelefon 20 erfolgen. So könnten mögliche Bankdaten zur Bezahlung auch direkt in der Applikation des Mobiltelefons 20 eingegeben oder hinterlegt werden und an den Server 2 übermittelt werden, welcher dann den bargeldlosen Bezahlvorgang abwickelt. Auch wäre es möglich, die erforderlichen Bankdaten zuvor auf dem Server 2 abzulegen und über die Applikation auf dem Mobiltelefon 20 dem Server 2 lediglich den Befehl zur Durchführung und Buchung des Bezahlvorganges zu übermitteln.

Ein wesentliches Merkmal des beschriebenen Systems ist, dass das Mobiltelefon 20 nicht direkt mit den lokalen Bauteilen des Systems, nämlich den Schranken 6, 8 bzw. deren lokalen Steuerungen 10 und dem Bezahlterminal 16 kommuniziert. Das Mobiltelefon 20 kommuniziert ausschließlich über das Internet 4 mit dem Server 2. Das Mobiltelefon 20 erfasst lediglich die Funksignale mit dem Identifikationsschlüsseln von den Funksendern 22, welche an den relevanten Bauteilen wie Schranken 6 und 8 und Bezahlterminal 16 angeordnet sind. So wird im Wesentlichen lediglich eine genaue Lokalisierung des Mobiltelefons 20 erreicht, sodass das Mobiltelefon 20 dem Server 2 lediglich mitteilen kann, an welchem der jeweiligen Komponenten des Systems es sich gerade befindet. Dies hat zum einen den Vorteil, dass geographische Koordinaten überhaupt nicht erfasst werden müssen, sodass keinerlei Positionsüberwachung des Nutzers des Mobiltelefons 20 stattfindet. Zum anderen besteht gegenüber der Verwendung einer Lokalisierung des Mobiltelefons 20 über GPS-Daten der Vorteil, dass dieses hier beschriebene System problemlos auch in geschlossenen Räumen funktioniert. Im Ergebnis bedeutet dieses System, das sich nicht das Mobiltelefon 20 bzw. der Nutzer bei der Einfahrt an der jeweiligen Sperreinrichtung bzw. Schranke 6, 8 anmeldet, sondern dass sich die jeweilige Schranke 6, 8 bei dem Mobiltelefon 20 anmeldet.

Das beschriebene System lässt sich sehr einfach in webbasierte Zufahrtkontrollsysteme integrieren, da lediglich eine Softwareanpassung und die Anbringung der Funksender 22 erforderlich ist. Darüber hinaus muss auf dem Mobiltelefon 20 des Nutzers lediglich die zugehörige Park-App installiert werden. Der auf dem Mobiltelefon 20 befindliche Teil des beschriebenen Systems könnte auch direkt in die Fahrzeugelektronik eines Fahrzeuges integriert werden.

### Bezugszeichen

- 2: Server
- 4: Internet
- 6: Schranke bzw. Einfahrt-Schranke
- 8: Schranke bzw. Ausfahrt-Schranke
- 10: lokale Steuerung
- 12: Induktionsschleife
- 14: Auswertelektronik
- 16: Bezahlterminal
- 18: Mobilfunknetz
- 20: Mobiltelefon
- 22: Funksender bzw. Beacon

## Patentansprüche

1. Parkraum-Zufahrtskontrollsystem mit
zumindest einer ersten Sperreinrichtung (6), welche mit einer zentralen Steuereinrichtung (2) derart zur Datenkommunikation verbunden ist, dass die erste Sperreinrichtung (6) durch einen Befehl der Steuereinrichtung (2) geöffnet werden kann,
einem an der ersten Sperreinrichtung (6) angeordneten Identifizierungselement (22) mit einem die Sperreinrichtung (6) eindeutig identifizierenden Identifikationsschlüssel,
zumindest einem mobilen Kommunikationsgerät (20), welches zur Datenkommunikation mit der Steuereinrichtung (2) verbunden ist und zum Auslesen des Identifikationsschlüssels von dem Identifizierungselement (22) ausgebildet ist, wobei
das mobile Kommunikationsgerät (20) und die Steuereinrichtung (2) derart zusammenwirken, dass der von dem Kommunikationsgerät (20) ausgelesene Identifikationsschlüssel von dem Kommunikationsgerät (20) an die Steuereinrichtung (2) übertragen wird,
die Steuereinrichtung (2) oder das mobile Kommunikationsgerät (20) einen temporären Parkschlüssel generiert, und
die Steuereinrichtung (2) in Reaktion auf ein von dem Kommunikationsgerät (20) an die Steuereinrichtung (2) gesendetes Anforderungssignal (6) die durch den Identifikationsschlüssel identifizierte erste Sperreinrichtung öffnet.

2. Parkraum-Zufahrtskontrollsystem nach Anspruch 1, bei welchem eine Identifikation des mobilen Kommunikationsgerätes (20) durch die Steuereinrichtung (2) ausschließlich auf Grundlage des temporären Parkschlüssels erfolgt.

3. Parkraum-Zufahrtskontrollsystem nach Anspruch 1 oder 2, bei welchem das zumindest eine mobile Kommunikationsgerät (20) und die Steuereinrichtung (2) jeweils einen Speicher aufweisen und derart ausgebildet sind, dass sie den temporären Parkschlüssel speichern.

4. Parkraum-Zufahrtskontrollsystem nach einem der vorangehenden Ansprüche, bei welchem die Steuereinrichtung (2) oder das mobile Kommunikationsgerät (20) derart ausgebildet sind, dass sie den temporären Parkschlüssel aus dem von dem Kommunikationsgerät (20) empfangenen Identifikationsschlüssel und einem Zeitstempel generieren.

5. Parkraum-Zufahrtskontrollsystem nach einem der vorangehenden Ansprüche, welches zumindest eine zweite Sperreinrichtung aufweist, welche mit der zentralen Steuereinrichtung (2) derart zur Datenkommunikation verbunden ist, dass die zweite Sperreinrichtung (8) durch einen Befehl der Steuereinrichtung (2) geöffnet werden kann, und wobei
an der zweiten Sperreinrichtung (8) ein Identifizierungselement (22) mit einem die Sperreinrichtung (8) eindeutig identifizierenden Identifikationsschlüssel angeordnet ist, welcher von dem mobilen Kommunikationsgerät (20) auslesbar und an die Steuereinrichtung übertragbar ist, und
die Steuereinrichtung (2) derart ausgebildet ist, dass die Steuereinrichtung (2) beim Empfang des Identifikationsschlüssels der zweiten Sperreinrichtung (8) von dem Kommunikationsgerät (20) den in dem Kommunikationsgerät gespeicherten temporären Parkschlüssel abruft und diese zweite Sperreinrichtung (8) nach Verifikation eines Bezahlvorganges für diesen temporären Parkschlüssel öffnet.

6. Parkraum-Zufahrtskontrollsystem nach Anspruch 5, bei welchem zumindest ein Bezahlterminal (16) vorhanden ist, welches mit der Steuereinrichtung (2) zur Datenkommunikation verbunden ist, und die Steuereinrichtung (2) derart ausgebildet ist, dass sie die zweite Sperreinrichtung (8) bei Empfang des Anforderungssignals und nach Bestätigung eines Bezahlvorganges von dem Bezahlterminal (16) öffnet.

7. Parkraum-Zufahrtskontrollsystem nach einem der vorangehenden Ansprüche bei welchem zumindest ein Bezahlterminal (16) vorhanden ist, welches mit der Steuereinrichtung (2) zur Datenkommunikation verbunden ist und welches ein Identifizierungselement (22) mit einem das Bezahlterminal (16) eindeutig identifizierenden Identifikationsschlüssel aufweist, wobei das zumindest eine mobile Kommunikationsgerät (20) zum Auslesen des Identifikationsschlüssels von dem Identifizierungselement (22) ausgebildet ist und das mobile Kommunikationsgerät (20) und die Steuereinrichtung (2) derart zusammenwirken, dass der von dem Kommunikationsgerät (20) ausgelesene Identifikationsschlüssel von dem Kommunikationsgerät (20) an die Steuereinrichtung (2) übertragen wird und die Steuereinrichtung (2) das so identifizierte Bezahlterminal (16) zur Durchführung eines Bezahlvorganges veranlasst.

8. Parkraum-Zufahrtskontrollsystem nach einem der vorangehenden Ansprüche, bei welchem das Identifizierungselement ein Funksender (22), insbesondere nach dem Bluetooth-Low-Energy-Standard ist, und das Kommunikationsgerät (20) einen korrespondierenden Funkempfänger aufweist.

9. Parkraum-Zufahrtskontrollsystem nach einem der vorangehenden Ansprüche, bei welchem die zumindest eine erste Sperreinrichtung (6) und/oder die zumindest eine zweite Sperreinrichtung (8) mit der Steuereinrichtung (2) über ein Datennetzwerk, insbesondere das Internet (4) verbunden ist.

10. Parkraum-Zufahrtskontrollsystem nach einem der vorangehenden Ansprüche, bei welchem das zumindest eine mobile Kommunikationsgerät (20) mit der Steuereinrichtung (2) über ein Datennetzwerk, insbesondere über ein Mobilfunknetz (18) und/oder das Internet (4) verbunden ist.

11. Parkraum-Zufahrtskontrollsystem nach einem der vorangehenden Ansprüche, bei welchem das zumindest eine mobile Kommunikationsgerät ein Mobiltelefon (20) oder ein in ein Fahrzeug integriertes Kommunikationsgerät ist.

12. Parkraum-Zufahrtskontrollsystem nach Anspruch 11, bei welchem das mobile Kommunikationsgerät ein übliches Mobiltelefon (20) ist, in welches die für das Zufahrtskontrollsystem erforderlichen Funktionen durch eine Software-Applikation integriert sind.

13. Parkraum-Zufahrtskontrollsystem nach einem der vorangehenden Ansprüche, bei welchem die Datenkommunikation zwischen dem zumindest einen mobilen Kommunikationsgerät (20) und der Steuereinrichtung (2) bidirektional ist.

14. Parkraum-Zufahrtskontrollsystem nach einem der vorangehenden Ansprüche, bei welchem das Identifizierungselement (22) und das zumindest eine mobilen Kommunikationsgerät (20) für eine unidirektionale Kommunikation zwischen Identifizierungselement (22) und Kommunikationsgerät (20) ausgebildet sind.

15. Parkraum-Zufahrtskontrollsystem nach einem der vorangehenden Ansprüche, bei welcher an der zumindest einen ersten Sperreinrichtung (6) und/oder der zumindest einen zweiten Sperreinrichtung (8) zumindest ein Detektor (12, 14) angeordnet ist, welcher mit der Steuereinrichtung (2) zur Datenkommunikation verbunden ist und zur Detektion eines vor der Sperreinrichtung (6, 8) stehenden Fahrzeuges ausgebildet ist.

16. Verfahren zur Kontrolle der Zufahrt in einen Parkraum mit folgenden Schritten:
Auslesen eines Identifikationsschlüssels einer eine Zufahrt versperrenden ersten Sperreinrichtung (6) durch ein mobiles Kommunikationsgerät (20),
Übertragen des ausgelesenen Identifikationsschlüssels von dem mobilen Kommunikationsgerät (20) an eine zentrale Steuereinrichtung (2),
Übertragen eines Anforderungssignals zur Anforderung des Öffnens der Sperreinrichtung (6) von dem Kommunikationsgerät (20) an die zentrale Steuereinrichtung (2),
Generieren eines temporären Parkschlüssels in der Steuereinrichtung (2) oder dem mobilen Kommunikationsgerät (20) Öffnen der durch den Identifikationsschlüssel identifizierten ersten Sperreinrichtung (6) durch die zentrale Steuereinrichtung (2) in Reaktion auf das Anforderungssignal.

17. Verfahren nach Anspruch 16, bei welchem das mobile Kommunikationsgerät (20) den temporären Parkschlüssel zur Identifikation an einem Bezahlterminal (16) oder einer eine Ausfahrt versperrenden zweiten Sperreinrichtung (8) an die Steuereinrichtung (2) überträgt.

18. Verfahren nach Anspruch 16 oder 17, mit folgenden weiteren Schritten:
Auslesen eines Identifikationsschlüssels einer eine Ausfahrt versperrenden zweiten Sperreinrichtung (8) durch das mobile Kommunikationsgerät (20),
Übertragen des ausgelesenen Identifikationsschlüssels von dem mobilen Kommunikationsgerät (20) an eine zentrale Steuereinrichtung (2),
Übertragen eines Anforderungssignals mit dem temporären Parkschlüssel zur Anforderung des Öffnens der zweiten Sperreinrichtung (8) von dem Kommunikationsgerät (20) an die zentrale Steuereinrichtung (2),
Verifikation eines Bezahlvorganges für den empfangenen temporären Parkschlüssel durch die Steuereinrichtung (2),
Öffnen der durch den Identifikationsschlüssel identifizierten zweiten Sperreinrichtung (6) durch die zentrale Steuereinrichtung (2) bei erfolgreicher Verifikation.

19. Verfahren nach einem der Ansprüche 16 bis 18, bei welchem die Steuereinrichtung die Sperreinrichtung (6, 8) nur dann öffnet, wenn von einem Detektor (12, 14) ein vor dieser Sperreinrichtung (6, 8) stehendes Fahrzeug erkannt wird.
